# EUROPEAN PATENT SPECIFICATION

(11) **EP 0 243 304 B1**
(45) Date of publication and mention of the grant of the patent: **02.06.1993**
(21) Application number: 87810197.1
(22) Date of filing: 02.04.1987
(51) Int. Cl.: C09B 67/20, C09B 67/08, C09B 67/22, C09B 48/00, C09B 57/00

(54) **Surface modified pigment compositions**
Zubereitungen von oberflächenmodifizierten Pigmenten
Compositions de pigments à surface modifiée

(30) Priority: 08.04.1986 US 849338
(43) Date of publication of application: 28.10.1987
(73) Proprietor: CIBA-GEIGY AG, 4002 Basel (CH)
(72) Inventor: Jaffe, Edward E., Wilmington Delaware 19810 (US)

(56) References cited:
- EP-A- 0 014 458
- EP-A- 0 069 396
- DE-A- 1 619 620
- DE-A- 3 542 437
- GB-A- 2 043 094

## Description

The present invention relates to surface modification of pigments, especially quinacridone and pyrrolopyrrole pigments in order to enhance their performance in modern automotive and other finish systems. In particular, the pigments are modified by treatment with a copolymer which serves to enhance the interaction of the pigment with the dispersion system, including the vehicle (resin) and solvent(s) which make up the dispersion medium, and with a derivative of the same pigment. This pigment modification leads to improved rheological characteristics of the dispersion, thus affording greater pigment concentrations and lower solvent emissions to the atmosphere during paint application. In addition, the modified products afford gloss and distinctness of image or mirror quality improvement to automotive and other similar finishes.

The modification of pigments by treating their surface with their own derivatives, forming blended pigment compositions, and the like, is well known in the art. For example, phthalimidomethylation of copper phthalocyanine is described in U.S. Patent 2,761,868, and phthalimidomethyl quinacridone preparation and use is described in U.S. Patent 3,275,637. Similarly, the preparation and use of sulfonated quinacridones is described in U.S. Patent 3,386,843. Phthalimidomethylation of indanthrone, flavanthrone, pyranthrone, and perylenes is further described in U.S. Patent 4,256,507. The use of these treating agents has a definite beneficial effect on rheology and finish appearance in some systems.

Frequently, performance of such treated pigments is system dependent, that is performance is affected by the type of vehicle (resin) and type of solvents used. For some systems, surface treatment of pigment with one of the derivatives mentioned earlier is not necessary. For other systems, even surface treated pigments do not perform adequately. This is particularly the case in modern high solids, low solvent systems, where pigment and system compatability must be of a particularly high order to obtain finishes with high gloss and distinctness of image.

In seeking to alleviate this variability and obtain consistency of performance in certain paint systems, various polymeric products have been suggested for use. Thus, it was found that enhancement of these properties in certain paint systems could be achieved by the introduction unto a pigment or a pigment treated with its own derivative of a polymeric dispersant which helps in stabilizing a dispersion, keeping it substantially deflocculated, thus affording lower viscosity and ultimately better finish appearance performance.

As representative of this group of polymeric dispersants, reference is made to basic nitrogen-containing copolymers of the polyurethane series as described in EP Patent Application 154,678, especially to a commercially available polymeric material sold under the mark ®DISPERBYK 160 by BYK-Chemie. This product is recommended as an additive in paint dispersion preparation in the form of a solution in xylene/butyl acetate, primarily the xylene solvent system in which said polymer is believed to be prepared. The presence of the polymer in solvent systems is generally reflective of all such materials.

However, the use of such solution form presents several problems. It requires the paint manufacturer to add another ingredient during dispersion preparation without having any control over the solvents going into the making of the dispersion. Since solvents frequently play a key role in the total stability of a given dispersion, such lack of control is particularly disadvantageous. In some cases, solvent incompatibility would preclude the use of currently available polymers. Consequently, it was necessary to find a way to introduce the copolymer into the pigment to obtain the beneficial properties thereof and at the same time avoid the use of solvents as an extra and frequently complicating ingredient in pigment dispersion preparation.

Accordingly, it is the primary object of this invention to provide polymer-containing pigment compositions which exhibit improved rheological and finish characteristics.

It is further object to provide such pigment compositions without the present therein of a multiplicity of solvents, so as to avoid the various difficulties encountered with such solvents.

Various other objects and advantages of this invention will become apparent from the following description thereof.

It has now been determined that by treating a primary pigment with a basic dispersant selected from the group consisting of nitrogen-containing copolymers of the polyurethane series (hereinafter referred to as copolymer), in the substantial absence of solvents, and with a dispersion-improving derivative of the primary pigment, significantly improved pigment systems are obtained. Thus, it has been found that the copolymer, optionally dissolved in a water-soluble diluent for ease of addition, can be introduced into an aqueous suspension of the pigment/pigment derivative mixture, whereupon the polymer comes out of solution and being organophilic associates itself with the pigment mixture. The isolated pigment mixture, which is extended with the copolymer, performs in a finish as well as pigments prepared with separately added solutions of the copolymer to the dispersion when the copolymer solvents are totally compatible with the system. Thus, no extra solvents nor an extra addition step are required to achieve the desired improvements in rheology, gloss and distinctness of image. Products prepared by this approach perform very well in a series of paint systems but particularly in alkyd and polyester systems. As noted, the improved products require no additional additives or solvents, all requirements having been built into a given pigment.

For purposes of this invention, the preferred primary pigments are γ-quinacridone and 1,4-diketo-pyrrolopyrroles. The most preferred primary pigment is γ-quinacridone. It should he noted, however, that other suitable organic pigments may include α- and β-quinacridones, substituted quinacridones, solid solutions of quinacridones, phthalocyanines, indanthrones, isoindolinones, flavanthrones, pyranthrones, thioindigo, perylenes, mono- and dis-azo pigments and the like.

Preferred 1,4-diketo-pyrrolopyrroles are such of the formula I 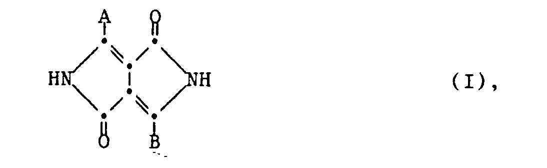
wherein A and B independently are phenyl or phenyl substituted by halogen, C₁-C₆alkyl, C₁-C₆alkoxy, C₁-C₆alkylmercapto, trifluoromethyl, cyano, dimethylamino, diethylamino, C₂-C₆alkoxycarbonyl, acetylamino, carbamoyl or sulfamoyl.

The most preferred 1,4-diketo-pyrrolopyrroles are those of the formula I, wherein A and B independently are phenyl or p-chlorophenyl.

As an optional but preferred ingredient, the dispersion-improving derivatives of the primary pigments likewise are known to those skilled in the art. Typical derivatives include, for example, the mono-, di-, tri- and tetra-phthalimidomethyl, o-carboxybenzamidomethyl and sulfonic acid derivatives. For purposes of this invention, the phthalimidomethyl and sulfonic acid derivatives are preferred for use. The preparation uf such derivatives is disclosed, for example, in U.S. Patents 2,761,868, 3,275,637, 3,386,843 and 4,256,507. The phthalimidomethyl compounds may be characterized by the formula 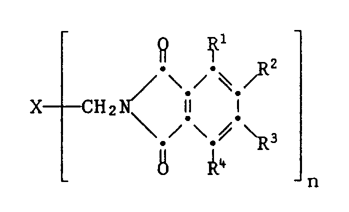
wherein X is the molecular moiety of the desired pigment, R¹, R³ and R⁴ are independently hydrogen or halogen, R² is hydrogen, halogen, carboxyl, nitro, N-(C₁-C₆)alkylcarbamyl, N-phenylcarbamyl or benzoylamino and n is 1-4. Sulfonates may correspond to the formula

X―(SO₃M)ₘ

wherein X is the molecular moiety of the desired pigment, m is 1-2 and M is hydrogen or a metal ion.

Examples of C₁-C₆alkyl groups are methyl, ethyl, propyl, isopropyl, n-butyl, sec.-butyl, tert.-butyl, pentyl, hexyl.

Examples of C₁-C₆alkoxy groups are methoxy, ethoxy, propoxy, isopropoxy, n-butoxy, sec.-butoxy, tert.-butoxy, hexyloxy.

Examples of C₂-C₆alkoxycarbonyl groups are methoxycarbonyl, ethoxycarbonyl, n-propoxycarbonyl, isopropoxycarbonyl, n-butoxycarbonyl.

The basic nitrogen-containing copolymer is generally a higher molecular weight copolymer with functional groups having a strong affinity for pigments. The copolymer can vary in molecular weight but will generally have an amine value ranging from 5-15 mg KOH/g, and preferably 10-12 mg KOH/g. A typical copolymer is represented by ®DISPERBYK 160 from BYK-Chemie. The product is identified in the literature as a wetting and dispersing additive for organic pigments, said pigments to be applicable for use in a broad range of industrial paints and coatings. The product is alleged to improve wetting and color strength stabilization and to prevent the re-flocculation and/or co-flocculation of pigments. It is to be noted that this copolymer is present to the extent of about 30 %, by weight, in a xylene/butyl acetate solvent system and is recommended for use in such solvent system.

For purposes of the instant invention, however, the copolymer is not present in a solvent system. Rather, the copolymer is utilized as a solid or a solution of the dry copolymer in a water-soluble diluent such as acetone, methyl ethyl ketone, and the like, to facilitate copolymer introduction onto the pigment surface.

With regard to the copolymer, it can be isolated from the solvent by distillation, leaving the desired polymer in quantitative yield as a colorless, crystalline solid, which is sufficiently high melting to allow pulverization to a very fine powder. The removal of the solvent is best accomplished under vacuum of about 13 mbar and a temperature of 50 to 60°C, although other conditions may be utilized. The solid polymer can be dissolved, for example, in acetone and aqueous slurries of pigment treated with it. When the acetone solution comes in contact with water, the polymer precipitates out in a fine state of subdivision; and without xylene being present, the interaction with the pigment particles is even more effective. The absence of xylene makes pigment isolation and washing considerably easier. Even more simply, the dry polymer can be co-pulverized and throughly blended with a pigment or a pigment the surface of which has already been pretreated with the special treating agents. Since the polymer will dissolve, at least in part, in most solvents used in dispersion preparation, its interaction with the pigment surface will generally occur during pigment dispersion preparation.

The compositions of this invention are prepared by dispersing the primary pigment, generally in presscake form, in water and then adding an aqueous suspension of the pigment derivative thereto.

Adequate stirring is necessary to provide a proper slurry. The copolymer dissolved in acetone is slowly added to the slurry which is kept at RT or heated to a maximum of about 50°C. The slurry is maintained for an adequate period of time, e.g. 30 to 60 minutes, in order to insure adequate distribution of the copolymer. The resulting pigment is then isolated by conventional means.

A dry preparative approach is also applicable wherein the isolated and dried pigment, pigment derivative and nitrogen-containing copolymer are thoroughly blended to provide a homogeneous system.

Regarding concentrations, the pigment derivative is present in an amount of from about 1 to 10 %, by weight of primary pigment, and preferably from about 2 to 6 %. Correspondingly, the copolymer is present in an amount of from about 3 to 20 %, by weight of primary pigment, preferably 5 to 15 %. Lesser amounts of copolymer do not provide the desired rheology improvement of the dispersion and gloss and distinction of image in the final finish, while excess amounts do not provide the added benefit to warrant the added cost and tend to decrease the strength of the pigment.

As previously noted, the pigment compositions are useful in a wide variety of industrial paints and coatings, such as automotive finishing and refinishing paints based on alkyd/melamine, acrylic/melamine, acrylic/isocyanate, saturated polyesters, in both conventional and high solids form, containing conventional additives. The pigment modification leads to improved rheological characteristics of the dispersion, thus affording greater pigment concentrations and lower solvent emissions to the atmosphere during paint application. In addition, the modified products afford gloss and distinctness of image or mirror quality improvement of the automotive or other similar finishes.

The following examples further illustrate the preferred embodiments of this invention. In these examples, all parts given are by weight unless otherwise noted.

### Example 1

This example illustrates the preparation of a typical modified pigment system of this invention.

To 6820 parts of water is added 2640 parts of gamma quinacridone (QA) aqueous presscake containing 25.8 % solids, by weight, or 681 parts of pigment. The slurry is stirred to complete uniformity. Thereafter, 20.43 parts of 2-phthalimidomethylQA dispersed in 270 parts water is added and stirring in cintinued for 30 minutes. A solution of 41.2 parts solid, dry copolymer (®DISPERBYK 160 from BYK-Chemie) dissolved in 144 parts of acetone is then added uniformly with effective stirring over a period of one hour. After completion of the addition, stirring is continued for an additional half hour. The pigment is isolated by filtration in a plate and frame press and washed with room temperature water until the filtrate shows a resistivity equal to 95 % of the wash water. The product is dried at 80°C to constant weight and then pulverized.

In order to determine the performance characteristics thereof, the pigment is dispersed in a conventional manner in an alkyd paint system (a) (Setal 84 from Kunstharsfabriek Synthesis B.V., Holland) and the resulting millbase containing 12.5 %, by weight, modified pigment, 54.3 %, by weight, total nonvolatile solids and a pigment to binder ratio of 0.3 is measured for viscosity using a Brookfield Digital Viscometer (Model RVTD) at 10 rpm, spindle #3, at 23°C, expressed in centipoises.

After letdown of the millbase and paint preparation, a masstone paint panel (10 cm x 15 cm, 10 gauge aluminium, gray acrylic primed panel spray painted to visual hiding over a black and white checker-board) is prepared and dried and 20° gloss is measured with a gloss meter Glossguard System 20/60/85 (Model G67526). The results are noted in the following table.

| | Viscosity (cps) | Gloss of Masstone |
|---|---|---|
| Untreated -QA Pigment | 2,320 | 80 |
| Product of Example 1 | 670 | 89 |

The improvement in viscosity and gloss is quite evident.

The same pigment and an untreated QA pigment are then incorporated into a color coat/clear coat system, the color coat being a polyester system in which the pigment is dispersed at 20.0 %, by weight, concentration with 50.5 % total nonvolatile solids and pigment to binder ratio of 0.65 and the clear coat being a thermosetting enamel, the following viscosities (determined as above) being observed at 10 rpm and 50 rpm shear.

| | Viscosity (cps) | |
|---|---|---|
| | 10 rpm | 50 rpm |
| Untreated -QA Pigment | 6,780 | 2,644 |
| Product of Example 1 | 800 | 784 |

It is seen that the pattern of substantial improvement is likewise present in a different coating system.

### Example 2

Isolated and dried gamma QA is pulverized. The same is done separately with 2-phthalimidomethylQA. Dry copolymer (®DISPERBYK 160) is prepared by removal of the xylene/butyl acetate solvent system at 10.5-13 mbar pressure and a temperature of 50-60°C and subsequent pulverization. The dry products are then utilized as follows:
A 500 ml jar is charged with 58.2 parts gamma QA and 2.8 parts 2-phthalimidomethylQA and blended on a two roll mill. Thereafter, 3.6 parts of copolymer are added and blending continued to uniformity.

The product is evaluated in alkyd system (a) as shown in Example 1, and the viscosity of the dispersion and 20° gloss of the masstone finish are measured in the noted manner and compared to a sample of untreated gamma QA.

| | Viscosity (cps) Alkyd (a) | Gloss of Masstone Alkyd (a) |
|---|---|---|
| Untreated γ-QA Pigment | 2,320 | 80 |
| Product of Example 2 | 560 | 89 |

If instead of 3 % 2-phthalimidomethylQA, as shown above, 5 % is incorporated without altering the other ingredients, the following results are obtained in alkyd resin (a):

| | | |
|---|---|---|
| Pigment of Example 2 with 5 % 2-phthalimidomethylQA | 520 | 89 |

The results show the effectiveness of the combined action of the two treating agents, incorporated in the manner described.

### Example 3

227 parts gamma QA treated with about 4 %, by weight, QA monosulfonic acid in dry form are blended with 136.2 parts copolymer (®DISPERBYK 160) in a 2-liter plastic bottle by rotating on a two roll mill for 30 minutes. The above blend is then, in turn, blended with 2043 parts of gamma QA treated with about 4 % QA monosulfonic acid in dry form in a 19 liter container on a two roll mill for one hour.

The resulting product is evaluated in alkyd system (a). The results are shown below compared to a product which is devoid of copolymer but is otherwise identical.

| | Viscosity (cps) Alkyd (a) | Gloss of Masstone Alkyd (a) |
|---|---|---|
| Product of Example 3 | 570 | 88 |
| Untreated γ-QA Pigment | 2,320 | 80 |

### Example 4

The following mill bases have been prepared according to the method as described in Example 1, i.e. the pigment or pigment mixture is incorporated in conventional manner in an alkyd paint system (®Setal 84; solids content: 70 % by weight).

Mill base A: containing as pigment 1,4-diketo-3,6-di-(4-chlorophenyl)-pyrrolo-[3,4-c]-pyrrole, but without any other additive in the alkyd paint system.

Mill base B: containing as pigment a mixture consisting of 98 %, by weight, of 1,4-diketo-3,6-di-(4-chlorophenyl)-pyrrolo-[3,4-c]-pyrrole and 2 %, by weight, of the calcium salt of 1,4-diketo-3-(4'-chlorophenyl)-6-phenylpyrrolo-[3,4-c]-pyrrole-4''- sulfonic acid and additionally 15 %, by weight, based on dry pigment mixture, copolymer.

The flow properties of the mill base containing 12 %, by weight, of pigment and 54 %,, by weight, of total solids, and whose pigment/binder ratio is 0.3, are determined with HAAKE viscosimeter (®Rotovisco RV12; measuring temperature: 25°C, measuring system: SV-SP, shear range: D = 0-100 [1/s]). For simple characterization of the flow curves, viscosity values at D = 10 [l/s] and 100 [1/s], calculated from optimum regression curves, can be cited.

The following viscosity values are determined
- - for the mill base A: at D = 10 [1/s]: 605 mPa · s
at D = 100 [1/s]: 280 mPa · s
- - for the mill base B: at D = 10 [1/s]: 249 mPa · s
at D = 100 [1/s]: 181 mPa · s
1,4-Diketo-3,6-di-(4-chlorophenyl)-pyrrolo-[3,4-c]-pyrrole is a known compound which can be prepared e.g. in accordance with Example 6 of U.S. Patent 4,579,949.

### Preparation of the pigment mixture for mill base B

a) 5.0 g of 1,4-Diketo-3-phenyl-6-(4'-chlorophenyl)-pyrrolo-[3,4-c]-pyrrole (prepared in accordance with Example 6 of EP-Patent Application 184 982) are added at 2° to 5°C over 10 minutes to a mixture of 40 g of fuming sulfuric acid (25 % content of SO₃) and 40 g of sulfuric acid monohydrate. The mixture is stirred for 1/2 hour at 5°C and then for 17 hours at 20°C, and subsequently poured on to ice-water. The weight of the mixture is 420 g. To the mixture are added 30 g of sodium chloride at 70-75°C and stirring is continued for 1 hour at the same temperature. After cooling the mixture to 20°C, the precipitate is isolated by filtration, washed with 5 % sodium chloride solution until free of acid and dried at 120°C, affording 6.4 g of the sodium salt of the mono-sulfonic acid of 1,4-diketo-3-phenyl-6-(4'-chlorophenyl)-pyrrolo-[3,4-c]-pyrrole, taking into account the content of sodium chloride.
b) 20 g of 1,4-Diketo-3,6-di-(4-chlorophenyl)-pyrrolo-[3,4-c]-pyrrole, prepared in accordance with Example 6 of U.S. Patent 4,579,949, are stirred in the form of the moist filter cake in a small amount of deionised water. The whole is made up to 600 ml with water and stirred for 1 hour at room temperature. To the mixture is then added a solution of 0.59 g of the sodium sulfonate obtained in a) in 200 ml of water and the batch is stirred for 1 hour at room temperature. Then a solution of 5 g of CaCl₂ in a small amount of water is added and the mixture is heated to 75°C. The mixture is heated for 1 hour at this temperature, then cooled to room temperature and filtered. The filter residue is washed with water and dried overnight in a vacuum cabinet at 120°C, to give a mixture consisting of the compounds of the formulae 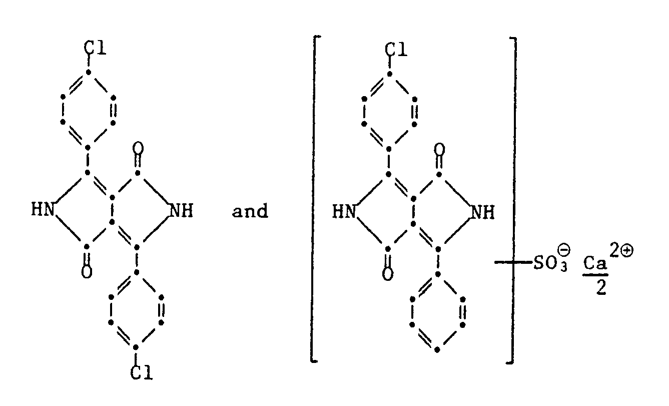 in the ratio of about 98:2 parts by weight.

## Claims

1. A pigment composition containing
a) an organic pigment,
b) 1 to 10 % by weight of the pigment of a dispersion improving derivative of said pigment and
c) 3 to 20 % by weight of the pigment of a substantially solvent-free basic dispersant selected from the group consisting of nitrogen-containing copolymer of the polyurethane series.

2. The composition of claim 1, wherein said organic pigment is a quinacridone or a substituted quinacridone or a solid solution of quinacridones.

3. The composition of claim 1, wherein said organic pigment is γ-quinacridone.

4. The composition of claim 1, wherein said organic pigment is a 1,4-diketo-pyrrolopyrrole.

5. The composition of claim 1, wherein said organic pigment is a 1,4-diketo-pyrrolopyrrole of the formula I 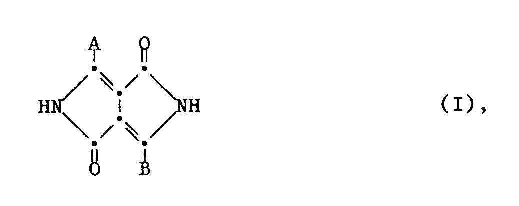 wherein A and B independently are phenyl or phenyl substituted by halogen, C₁-C₆alkyl, C₁-C₆alkoxy, C₁-C₆alkylmercapto, trifluoromethyl, cyano, dimethylamino, diethylamino, C₂-C₆alkoxycarbonyl, acetylamino, carbamoyl or sulfamoyl.

6. The composition of claim 1, wherein said organic pigment is a 1,4-diketo-pyrrolopyrrole of the formula I, wherein A and B independently are phenyl or p-chlorophenyl.

7. The composition of claim 1, wherein said copolymer has an amine value ranging from 5-15 mg KOH/g.

8. The composition of claim 1, wherein said dispersion improving derivative is a phthalimidomethyl, sulfonic acid or carboxybenzamidomethyl derivative of said pigment.

9. The composition of claim 2, wherein said dispersion improving derivative is a phthalimidomethyl, sulfonic acid or carboxybenzamidomethyl derivative of said quinacridone.

10. The composition of claim 4, wherein said dispersion improving derivative is a sulfonic acid derivative of said 1,4-diketopyrrolopyrrole.

11. A process for improving the rheological and stability characteristics of an organic pigment dispersion and the gloss and distinctness properties of a finish prepared therefrom which comprises treating said organic pigment with from about 1 to 10 % by weight of a dispersion improving derivative of said pigment and from about 3 to 20 % by weight of a substantially solvent-free basic dispersant selected from the group consisting of nitrogen-containing copolymers of the polyurethane series, said percentages being based on the weight of pigment.

## Patentansprüche

1. Pigmentzusammensetzung enthaltend
a) ein organisches Pigment,
b) 1 bis 10 Gew.-% des Pigments eines dispersionsverbessernden Derivats des Pigments und
c) 3 bis 20 Gew.-% des Pigments eines im wesentlichen lösungsmittelfreien basischen Dispersants, ausgewählt aus der Gruppe, bestehend aus stickstoffhaltigem Copolymer der Polyurethanreihen.

2. Zusammensetzung nach Anspruch 1, wobei das organische Pigment ein Chinacridon oder ein substituiertes Chinacridon oder eine feste Lösung von Chinacridonen ist.

3. Zusammensetzung nach Anspruch 1, wobei das organische Pigment γ-Chinacridon ist.

4. Zusammensetzung nach Anspruch 1, wobei das organische Pigment ein 1,4-Diketo-pyrrolopyrrol ist.

5. Zusammensetzung nach Anspruch 1, wobei das organische Pigment ein 1,4-Diketo-pyrrolopyrrol der Formel I ist, 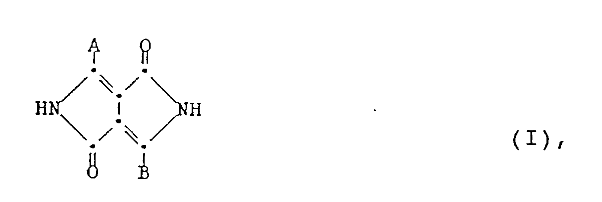 worin A und B unabhängig voneinander Phenyl oder Phenyl, substituiert mit Halogen, C₁-C₆-Alkyl, C₁-C₆-Alkoxy, C₁-C₆-Alkylmercapto, Trifluormethyl, Cyano, Dimethylamino, Diethylamino, C₂-C₆-Alkoxycarbonyl, Acetylamino, Carbamoyl oder Sulfamoyl bedeuten.

6. Zusammensetzung nach Anspruch 1, wobei das organische Pigment ein 1,4-Diketo-pyrrolopyrrol der Formel I ist, worin A und B unabhängig voneinander Phenyl oder p-Chlorphenyl sind.

7. Zusammensetzung nach Anspruch 1, wobei das Copolymer einen Aminwert im Bereich von 5-15 mg KOH/g aufweist.

8. Zusammensetzung nach Anspruch 1, wobei das dispersionsverbessernde Derivat ein Phthalimidomethyl-, Sulfonsäure- oder Carboxybenzamidomethylderivat des Pigments ist.

9. Zusammensetzung nach Anspruch 2, wobei das dispersionsverbessernde Derivat ein Phthalimidomethyl-, Sulfonsäure- oder Carboxybenzamidomethylderivat des Chinacridons ist.

10. Zusammensetzung nach Anspruch 4, wobei das dispersionsverbessernde Derivat ein Sulfonsäurederivat des 1,4-Diketo-pyrrolopyrrols ist.

11. Verfahren zur Verbesserung der rheologischen und Stabilitätseigenschaften einer organischen Pigmentdispersion und des Glanzes und der Klarheitseigenschaften eines daraus hergestellten Lackes, umfassend die Behandlung des organischen Pigments mit etwa 1 bis 10 Gew.-% eines dispersionsverbessernden Derivats des Pigments und etwa 3 bis 20 Gew.-% eines im wesentlichen losungsmittelfreien basischen Dispersants, ausgewählt aus der. Gruppe, bestehend aus stickstoffhaltigen Copolymerisaten der Polyurethanreihen, wobei die Prozentangaben auf das Gewicht des Pigments bezogen sind.

## Revendications

1. Composition de pigment, contenant
a) un pigment organique,
b) 1 à 10 %, en poids du pigment, d'un dérivé de ce pigment améliorant la dispersion, et
c) 3 à 20 % en poids du pigment, d'un dispersant basique quasi totalement dépourvu de solvant et choisi dans l'ensemble consistant en un copolymère, contenant de l'azote, de la série des polyuréthannes.

2. Composition selon la revendication 1, dans laquelle ledit pigment organique est une quinacridone ou une quinacridone substituée ou une solution solide de quinacridones.

3. Composition selon la revendication 1, dans laquelle ledit pigment organique est la gamma-quinacridone.

4. Composition selon la revendication 1, dans laquelle ledit pigment organique est un 1,4-dicétopyrrolopyrrole .

5. Composition selon la revendication 1, dans laquelle ledit pigment organique est un 1,4-dicétopyrrolopyrrole de formule 1 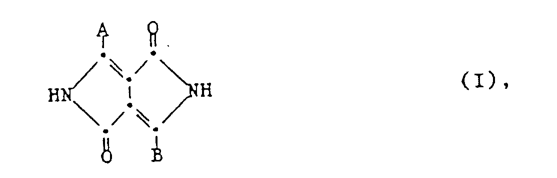 dans laquelle A et B représentent chacun, indépendamment, un groupe phényle, ou un groupe phényle substitué par de l'halogène, par un groupe alkyle en C₁ à C₆, alcoxy en C₁ à C₆, alkylmercapto en C₁ à C₆, trifluorométhyle, cyano, diméthylamino, diéthylamino, alcoxycarbonyle en C₂ à C₆, acétylamino, carbamoyle ou sulfamoyle.

6. Composition selon la revendication 1, dans laquelle ledit pigment organique est un 1,4-dicétopyrrolopyrrole de formule I, dans laquelle A et B représentent chacun , indépendamment, un groupe phényle ou p-chlorophényle.

7. Composition selon la revendication 1, dans laquelle ledit copolymère présente un indice d'amine compris entre 5 et 15 mg de KOH/g.

8. Composition selon la revendication 1, dans laquelle ledit dérivé capable d'améliorer la dispersion est un dérivé de type phtalimidométhyle, acide sulfonique ou carboxybenzamidométhyle dudit pigment.

9. Composition selon la revendication 2,dans laquelle ledit dérivé améliorant la dispersion est un dérivé de type phtalimidométhyle, acide sulfonique ou carboxybenzamidométhyle de ladite quinacridone.

10. Composition selon la revendication 4, dans laquelle ledit dérivé améliorant la dispersion est un dérivé de type acide sulfonique dudit 1,4-dicétopyrrolopyrrole.

11. Procédé pour améliorer les caractéristiques rhéologiques et de stabilité d'une dispersion de pigment organique et les propriétés de brillant et de netteté d'une composition de finition préparée à partir de cette dispersion, qui comprend le traitement dudit pigment organique par environ 1 à 10 % en poids d'un dérivé, capable d'améliorer la dispersion, dudit pigment et environ 3 à 20 % en poids d'un dispersant basique, quasi totalement dépourvu de solvant et choisi dans l'ensemble consistant en des copolymères, contenant de l'azote, de la série du polyuréthame lesdits pourcentages étant fondés sur le poids du pigment.
